# EUROPEAN PATENT APPLICATION

(11) **EP 1 544 537 A1**
(43) Date of publication of application: **22.06.2005**
(21) Application number: 03795253.8
(22) Date of filing: 29.08.2003
(51) Int. Cl.: F21V 8/00

(54) **LIGHT GUIDE PLATE AND BACKLIGHT DEVICE**

(30) Priority: 30.08.2002 JP 2002255432
(71) Applicant: Hitachi Chemical Co., Ltd., Shinjuku-ku, Tokyo 163-0449 (JP)
(72) Inventor: SUGIMOTO, Yasushi, Hitachi Chemical Co., Ltd., Tsukuba-shi, Ibaraki 300-4247 (JP); TESHIMA, Teruo, Hitachi Chemical Co., Ltd., Shimodate-shi, Ibaraki 308-8524 (JP); DOBASHI, Tomo, Hitachi Chemical Co., Ltd., Shimodate-shi, Ibaraki 308-8521 (JP); MAKISHIMA, Kazuhiro, Hitachi Chemical Co., Ltd., Shimodate-shi, Ibaraki 308-8524 (JP); KOMATSU, Tokutaro, Hitachi Chemical Co., Ltd., Tsukuba-shi, Ibaraki 300-4247 (JP); ENDO, Toshihiro, Hitachi Chemical Co., Ltd., Tsukuba-shi, Ibaraki 300-4247 (JP)
(74) Representative: HOFFMANN EITLE
(86) International application number: PCT/JP2003/011067
(87) International publication number: WO 2004/025174

(57) **Abstract**

A light guide plate 10 comprising an entry surface 11 on at least one side surface, a rectangular exit surface 12 orthogonal to the entry surface 11 and a reflecting surface 13, wherein the reflecting surface 13 has a deflection pattern that receives a ray of light incoming from the entry surface 11 or the exit surface 12 at a certain angle to the normal to the exit surface 12 and outputs the ray of light at a reduced angle to the normal, the deflection pattern has a plurality of arcuate deflection pattern elements formed on a plurality of concentric circles, the exit surface 12 has an anisotropic diffusion pattern that transmits so as to spread, a ray of light incoming from the deflection pattern at an angle up to a specified angle with respect to the normal the exit surface 12, the anisotropic diffusion pattern spreads the ray of light incoming from the deflection pattern so that the width of diffusion in a direction orthogonal to the radial direction of arcs of the concentric circles is larger than that in the radial direction, and the center of the concentric circles is positioned on any one of the side surfaces of the light guide plate 10 or in the vicinity thereof.

## Description

### FIELD OF THE INVENTION

The present invention relates to a light guide plate for guiding light emitted from a light source and a backlight device furnishing this light guide plate that illuminates liquid crystal display elements or the like from the rear surface.

### BACKGROUND OF THE INVENTION

Light guide plates that guide light emitted from a light source to a liquid crystal display device in order to illuminate the liquid crystal display device of a portable telephone or the like and backlight devices that provide such a light guide plate and illuminate a liquid crystal display device from the rear surface have been disclosed in conventional technology.

FIGS. 1A, 1B and 1C show a conventional light guide plate from the outside (refer for example, to Japanese Patent No. 3151830). FIG. 1A provides a perspective view and FIG. 1B a plan view. FIG. 1A also shows a light emitting diode 120 light source.

A light guide plate 110, comprised of a transparent material such as PMMA or polycarbonate or the like has a substantially level, planar form. The upper surface of this light guide plate 110 is a surface from which light exits, an exit surface 112, the lower surface is a light reflecting surface 113 and one of the side surfaces is a light entry surface 111. A deflection pattern consisting of a plurality of deflection pattern elements 114 is formed on the reflecting surface 113 for reflecting light entering from the entry surface 111 toward the exit surface 112. This realizes an arrangement widely used for mobile telephones and the like called a side edge system, in which, as in the light guide plate 110, light input from the entry surface 111 provided as a side surface thereof is emitted from the exit surface 112 comprising the main surface.

Here, the deflection pattern elements 114 are disposed with equidistant intervals therebetween, the longitudinal direction of these elements being perpendicular in relation to the traveling direction of light from a light source 120. When a plurality of light sources 120 are disposed mutually separated, the reflecting surface 113 is divided into regions corresponding to each light source 120, the deflection pattern elements 114 being disposed so as to be perpendicular in relation to the traveling direction of light from the light source 120 corresponding to each region.

Light emitted from a light source 120 enters the light guide plate 110 from the entry surface 111 and, when reflected in the longer direction of the deflection pattern elements 114 formed on the reflecting surface 113, this light is deflected in the direction of the exit surface 112 and exits therefrom. Further, when this light is reflected in the shorter direction of the deflection pattern elements 114 such that the traveling direction of light is changed, there is a dispersing effect, weakening the directivity of the light source 120 (light emitting diode) and suppressing the occurrence of bright lines. That is to say, here, the deflection pattern elements 114 have a reflecting function, deflecting light in the direction of the exit surface 112 and a dispersing function, suppressing the occurrence of bright lines.

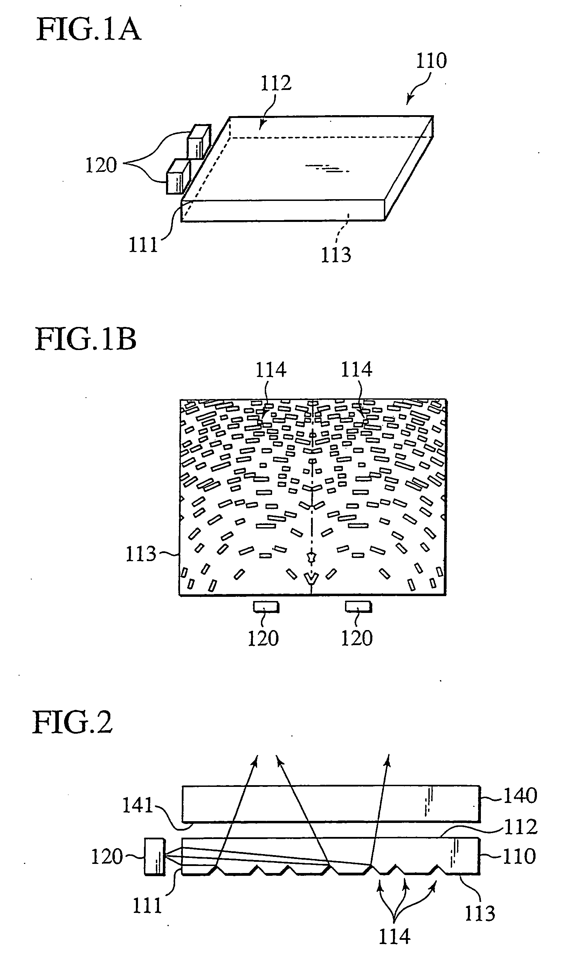

In this system, as the deflection pattern elements 114 are disposed with intervals therebetween deflection efficiency is low in the longer direction of the reflection surface and light emitted from the light source is not used efficiently. Moreover, when a plurality of light sources are used the arrangement of the deflection pattern elements 114 becomes extremely complex as shown in FIG 1B, making production difficult.

FIG. 2 shows how a conventional light guide plate and backlight device are used.

The light guide plate 110 is disposed directly below a liquid crystal display device 140 such that the exit surface 112 is facing the lower surface 141 of the liquid crystal display device 140. Light emitted from the light source diode 120 enters the light guide plate 110 via the entry surface 111.

Light entering the light guide plate 110 from the entry surface 111 is deflected by deflection pattern elements 114 formed on the reflecting surface 113 disposed on the opposite surface to the exit surface 112 and is reflected rising in the direction of the liquid crystal display device 140 and emitted from the exit surface 112.

Conventional technology has also proposed a hologram, wherein sensitized film is exposed to laser light via a rectangular opening having a diffuser thereby randomly forming a plurality of speckles (US Patent Nos. 5,365,354 and 5,534,386). The speckles of this hologram are substantially elliptical shaped, the longer and the shorter axes of the ellipsoid having a Fourier relationship with the narrow side and the long side respectively of the rectangle of the opening. If this hologram laser light is input the laser light is scattered by the speckles reproducing the rectangular shaped opening used during the exposure process. Usage of this kind of hologram enables anisotropic diffusion of the input laser light.

### SUMMARY OF THE INVENTION

In the case of a conventional light guide plate the proportion of light emitted from the exit surface inside light input from the entry surface is small creating a problem from the perspective of the efficiency of usage of light emitted from the light source.

With the foregoing in view, it is an object of the present invention to provide a light guide plate in which light is used efficiently and a backlight device incorporating this light guide plate.

In order to solve the above described problems the light guide plate related to the present invention is a light guide plate comprising an entry surface at the side surface and an exit surface on the upper surface or the lower surface, and having a deflection pattern disposed on that surface opposing this exit surface that receives a ray of light incoming from this entry surface or the exit surface at a certain angle to the normal to the exit surface and outputs the ray of light at a reduced angle to the normal, this deflection pattern having a plurality of arcuate deflection pattern elements formed conforming to a plurality of concentric circles, and an anisotropic diffusion pattern disposed on the exit surface, that transmits so as to spread, a ray of light incoming from the deflection pattern at an angle up to a specified angle with respect to the normal to the exit surface such that peripheral direction of the light ray is larger in comparison to the radial direction of the arcs of the concentric circles.

It is preferable for each deflection pattern elements to have an arcuate groove or an arcuate protruding part.

It is preferable for each deflection pattern elements to have an arcuate inclined surface.

It is preferable for each deflection pattern elements to furnish a plurality of arcuate inclined surfaces formed in conformance to a plurality of concentric circles.

It is preferable for the arcuate inclined surfaces to be disposed on the arcuate groove or on the arcuate protruding part.

It is preferable for the anisotropic diffusion pattern to have a surface relief hologram.

It is further preferable for the light guide plate to have a substantially rectangular form and for the center of the plurality of concentric circles to be positioned at a vertex of the rectangle or in the vicinity thereof.

Again, it is preferable for the light guide plate to have a notched surface as the entry surface at a vertex of the substantially rectangular form.

Moreover, it is preferable for the entry surface to have a finely contoured form such as a prism shape or a hairline shape or to have a cylindrical form in order to spread the light.

Again, it is preferable that the backlight device related to this invention, comprises as a backlight device, the light guide plate and a prism film having a plurality of refractive surfaces each formed conforming to the plurality of concentric circles, each refractive surface of the prism film deflecting light from the exit surface in the direction of the normal to the exit surface.

Further, it is preferable that the light guide plate has a rectangular shape and that the center of the plurality of concentric circles has essentially one light emission point at a vertex of the rectangle or in the vicinity thereof.

Moreover, it is preferable that the essentially one light emission point is from one LED.

The light guide plate related to the present invention has a reflecting surface further comprising a plurality of circular reflecting grooves each formed in conformance with the plurality of concentric circles and an exit surface integratedly formed with a surface relief hologram that transmits so as to spread, light reflected from each of the circular reflecting grooves such that the peripheral direction of the reflected light is larger in comparison to the radial direction of the concentric circles.

It is preferable that the circular reflecting groove forms a continuous uninterrupted groove and that the circular reflecting groove has an arcuate inclined surface facing the light source.

Again, it is preferable that the angle of inclination α1 in relation to the level surface of the light guide plate on the arcuate inclined surface side be between 0.5 degrees and 5 degrees such that after the light input from the entry surface on the side surface has been reflected a determined number of times at the upper and lower surfaces, the angle of incidence of the light ray in relation to the exit surface is below a critical angle and the light ray is emitted from the exit surface.

Moreover it is preferable that the aspect ratio of a light ray of the spread light be within the range from 1: 180-1: 3.

Further, it is preferable for the surface relief hologram to have a plurality of random speckle regions of long linear form extending in the radial direction of the concentric circles.

It is preferable that the light guide plate further has a prism sheet that deflects the transmitted and spread light in the direction of the normal to the planar surface of the light guide plate.

Again, the light guide plate of the present invention, being a light guide plate of planar shape into which light from an entry surface formed in the vicinity of one of the vertices of the planar shape is input and then output from an exit surface, comprises a reflecting groove formed on the surface opposing the exit surface, extending in a continuous arrangement in conformance to the perimeter of a circle the center of which is in the vicinity of the vertex, that reflects the light input to the entry surface to the exit surface and a diffuser formed on the exit surface that spreads the light reflected at the reflecting groove such that the peripheral direction of the light is larger in comparison to the radial direction of that perimeter.

Moreover, it is preferable that the diffuser is a hologram having a plurality of speckles the lengthwise direction of which is the radial direction of the perimeter.

Further, it is preferable that the entry surface is formed in a cylindrical form the axis of which is the direction of the normal, orthogonal to the exit surface.

Again, in the backlight device according to the present invention the entry surface has a cylindrical form, the axis of this cylindrical form being the direction of the normal, orthogonal to the exit surface of the backlight device, moreover the distance between the light emission point of the light source and the entry surface of the light guide plate is below 0.35 mm.

Moreover, the light guide plate related to the present invention is a light guide plate of rectangular form having an exit surface and a reflecting surface opposing the exit surface, wherein the reflecting surface has a plurality of uninterrupted, continuing inclined surfaces disposed in the form of concentric circles, the angle of inclination α1 of these inclined surfaces to the reflecting surface being between 40 degrees and 50 degrees, the center of the concentric circles is positioned at a vertex of the rectangular form or in the vicinity thereof, the exit surface has an anisotropic diffusion pattern that transmits so as to spread, a ray of light incoming from the deflection pattern at an angle up to a specified angle with respect to the normal to the exit surface, and the anisotropic diffusion pattern spreads a ray of light incoming from the deflection pattern so that the width of diffusion thereof in a direction orthogonal to the radial direction of the arcs of the concentric circles is larger than that in the radial direction.

It is preferable for the reflecting surface to have a planar surface part disposed between each inclined surface.

Further, it is preferable that the pitch of the inclined surface is reduced in accordance with the distance of separation of the inclined surface from the light emitting source.

Moreover, it is preferable for the angle of inclination α1 of the inclined surfaces in relation to the exit surface to be 40 degrees to 50 degrees.

Again, it is preferable for the anisotropic diffusion pattern to have a surface relief hologram.

Further, it is preferable for the surface relief hologram to have a plurality of random speckle regions of long linear form extending in the radial direction of the concentric circles.

Moreover, it is preferable that the surface relief hologram is formed as an integrated body with the exit surface of the light guide plate.

Further it is preferable that the aspect ratio of a light ray of the spread light be within the range from 1: 180-1: 3.

Moreover, it is preferable for the entry surface to have a finely contoured form such as a prism shape or a hairline shape or to have a cylindrical form in order to spread the light.

The backlight device related to the present invention has the light guide plate.

It is preferable that a light emitting point is at one of the vertices of the rectangle of the light guide plate or the vicinity thereof.

Further, it is preferable for the light emitting point to comprise an LED.

The light guide plate related to the present invention is a light guide plate comprising an entry surface of at least one side surface, a rectangular exit surface orthogonal to the entry surface and a reflecting surface, wherein the reflecting surface has a deflection pattern that receives a ray of light incoming from the entry surface or the exit surface at a certain angle to the normal to the exit surface and outputs the ray of light at a reduced angle to the normal, the deflection pattern has a plurality of arcuate deflection pattern elements formed on a plurality of concentric circles, the exit surface has an anisotropic diffusion pattern that transmits so as to spread, a ray of light incoming from the deflection pattern at an angle up to a specified angle with respect to the normal to the exit surface and the anisotropic diffusion pattern spreads the ray of light incoming from the deflection pattern so that the width of diffusion in a direction orthogonal to the radial direction of arcs of the concentric circles is larger than that in the radial direction.

It is preferable that the center of the concentric circles is positioned on any one of the side surfaces of the light guide plate or in the vicinity thereof.

It is preferable for each deflection pattern element to have an arcuate shaped groove or an arcuate shaped protruding part.

It is preferable for each deflection pattern element to have an arcuate inclined surface.

It is preferable for each deflection pattern element to furnish a plurality of arcuate inclined surfaces formed in conformance to the plurality of concentric circles.

It is preferable for the circular inclined surfaces to be disposed on an uninterrupted continuous groove or continuous protruding part, the direction of the light source being inclined in relation to the exit surface. This enables maximization of the area of inclined surface facilitating an improvement in the efficiency of utilization of light emitted from a light source.

Again, it is preferable that the angle of inclination α1 in relation to the level surface of the light guide plate on the arcuate inclined surface side be between 0.5 degrees and 45 degrees such that after the light input from the entry surface on the side surface has been reflected a determined number of times at the upper and lower surfaces, the angle of incidence of the light ray in relation to the exit surface is below a critical angle and is emitted from the exit surface.

Further, it is preferable for the anisotropic diffusion pattern to have a surface relief hologram.

Moreover, it is preferable for the surface relief hologram to have a plurality of random speckle regions of long linear form extending in the radial direction of the concentric circles.

It is preferable that the surface relief hologram be formed integrated with the exit surface of the light guide plate.

Moreover it is preferable that the aspect ratio of a light ray of the spread light be within the range from 1: 180-1: 3.

Moreover, it is preferable for the entry surface to have a finely contoured form such as a prism shape or a hairline shape or to have a cylindrical form in order to spread the light.

The light guide plate related to the present invention is a light guide plate comprising an entry surface using at least one side surface, a substantially rectangular exit surface orthogonal to the entry surface and a reflecting surface, wherein the reflecting surface has a deflection pattern that receives a ray of light incoming from the entry surface or the exit surface and outputs this ray of light such that the ray of light is output substantially perpendicular to the exit surface, the deflection pattern has a plurality of arcuate deflection pattern elements formed on a plurality of concentric circles, the exit surface has an anisotropic diffusion pattern that transmits so as to spread, a ray of light incoming from the deflection pattern at an angle up to a specified angle with respect to the normal to the exit surface and the anisotropic diffusion pattern spreads the ray of light incoming from the deflection pattern so that the width of diffusion in a direction orthogonal to the radial direction of arcs of the concentric circles is larger than that in the radial direction.

It is preferable that the center of the concentric circles be positioned on either of the side surfaces of the light guide plate or the vicinity thereof.

Further, it is preferable that the deflection pattern elements emit the light ray such that the angle of the normal to the exit face and the ray of light is smaller than a value within the range of 0.5 degrees to 5 degrees.

Moreover, it is preferable for the deflection pattern elements to have an arcuate groove or an arcuate protruding part.

Again, it is preferable that the deflection pattern elements have an arcuate inclined surface.

It is preferable that the deflection pattern elements have a plurality of arcuate inclined surfaces formed respectively in conformance to the plurality of concentric circles.

Further, it is preferable for the arcuate inclined surfaces to be disposed on an uninterrupted continuous groove or continuous protruding part, the direction of the light source being inclined in relation to the exit surface.

Moreover, it is preferable that the angle of inclination α1 in relation to the exit surface of the arcuate inclined surface be between 40 degrees and 50 degrees.

Further, it is preferable for the anisotropic diffusion pattern to have a surface relief hologram.

Moreover, it is preferable for the surface relief hologram to have a plurality of random speckle regions of long linear form extending in the radial direction of the concentric circles

Again, it is preferable that the reflecting surface has a planar part parallel to the exit surface.

The backlight device related to the present invention has this light guide plate.

The backlight device related to the present invention may have, in addition to the light guide plate, an optical film that deflects light emitted from the light guide plate in the direction of the normal to the light guide plate planar surface.

It is preferable that the optical film has a plurality of refractive surfaces formed in conformance to the plurality of concentric circles.

Further, it is preferable that the optical film be optical film formed as a grating or hologram.

Moreover, it is preferable that the entry surface of the light guide plate or the vicinity thereof has effectively one or not less than two light emitting points.

Again, it is preferable that the effectively more or than one two light emitting points each comprise one LED.

As described, according to the present invention a light guide plate and backlight device furnishing the light guide plate can more effectively utilize light.

### BRIEF DESCRIPTION OF THE DRAWINGS

FIG. 1A is a perspective view of the external appearance of a light guide plate according to the present invention;
FIG. 1B is a plan view of the external appearance of the light guide plate according to the present invention;
FIG. 2 is a front view of a light guide plate according to the present invention;
FIG. 3A is a plan view showing a first embodiment of a light guide plate according to the present invention;
FIG. 3B is a front view showing the first embodiment of the light guide plate;
FIG. 3C is a perspective view showing the first embodiment of the light guide plate;
FIG. 4 shows the dimensions of each part of the light guide plate;
FIG. 5 shows the optical path in the light guide plate;
FIG. 6 shows the hologram formed on the exit surface magnified 200 times;
FIG. 7 shows the hologram shown in FIG. 6 magnified further;
FIG. 8A illustrates the properties of the hologram, providing a plan view showing how the strength of light emitted from the points P1, P2 and P3 of the exit surface 12 of the light guide plate is angle dependent;
FIG. 8B illustrates the properties of the hologram, providing a three-dimensional perspective view depicting the strength distribution of light emitted from the point of P2 of the exit surface 11 of the light guide plate 10;
FIG. 9A illustrates the anisotropic angle dependency of light diffusion characteristics of the hologram, showing how the strength of emitted light for the θ direction is angle dependent;
FIG. 9B illustrates the anisotropic angle dependency of light diffusion characteristics of the hologram, showing how the strength of emitted light for the r direction is angle dependent;
FIG. 10 shows the bright line in light immediately prior to input in the hologram;
FIG. 11 is a perspective view showing the configuration of a device for producing the hologram of the present invention;
FIG. 12 shows a region of the hologram irradiated with laser light;
FIG. 13 shows a part of the backlight device constructed with the light guide plate and optical sheet (prism film);
FIG. 14 shows the optical sheet;
FIG. 15A is a plan view showing a second embodiment of a light guide plate according to the present invention;
FIG. 15B is a front view showing the second embodiment of the light guide plate;
FIG. 15C is a perspective view showing the second embodiment of the light guide plate;
FIG 16 shows the dimensions of each part of the light guide plate;
FIG. 17 shows the optical path of the light guide plate;
FIG 18A is a plan view showing a third embodiment of a light guide plate according to the present invention;
FIG. 18B is a front view showing the third embodiment of the light guide plate;
FIG. 18C is a perspective view showing the third embodiment of the light guide plate;
FIG. 19 shows a reflecting groove of the deflection pattern elements formed on the reflecting surface;
FIG 20 shows the dimensions of each part of the light guide plate;
FIG. 21A illustrates the properties of the hologram, providing a plan view showing how the strength of light emitted from the points P1, P2 and P3 of the exit surface 12 of the light guide plate is angle dependent;
FIG. 21B illustrates the properties of the hologram, providing a three-dimensional perspective view depicting the strength distribution of light emitted from the point P2 of the exit surface 12 of the light guide plate 10;
FIG. 22 shows the bright line in light immediately prior to input in the hologram;
FIG 23 shows the optical sheet;
FIG. 24A shows a first example of the light guide plate according to the second embodiment of the present invention;
FIG. 24B shows a second example of the light guide plate according to the second embodiment of the present invention;
FIG. 24C shows a third example of the light guide plate according to the second embodiment of the present invention; and
FIG. 25 shows the characteristics of dependency of the pitch of a reflecting groove on distance from a light emitting diode.

### DETAILED DESCRIPTION OF THE INVENTION

The embodiments of the light guide plate and backlight device related to the present invention will now be described with reference to the drawings.

In these drawings, for simplicity, like reference numerals identify like elements. Further, these drawings of the embodiments of the invention are used for the purpose of describing the content of the invention and do not definitively reflect the ratios of the dimensions of each of the parts.

Further, for convenience, a rectangular coordinate system is incorporated in the drawings. That is to say the x axis and the y axis are set in conformance with the two sides comprising the upper surface and the lower surface of the light guide plate in the traveling direction of light in the light guide plate and the z axis is set in the direction of the normal to the exit surface. Further, the positive and negative directions of the z axis are up and down.

### First Embodiment

A first embodiment of the present invention will now be described. According to this first embodiment, a notched surface (having an r shape) formed on the side surfaces of one of the vertices of a substantially rectangular shaped light guide plate provides an entry surface. Light entering the light guide plate from one light source advances while repeatedly undergoing total reflection inside the light guide plate, the angle thereof gradually rising as the light is reflected at the reflecting grooves such that the angle in relation to the exit surface gradually decreases, the light being emitted from the exit surface when a critical angle is reached.

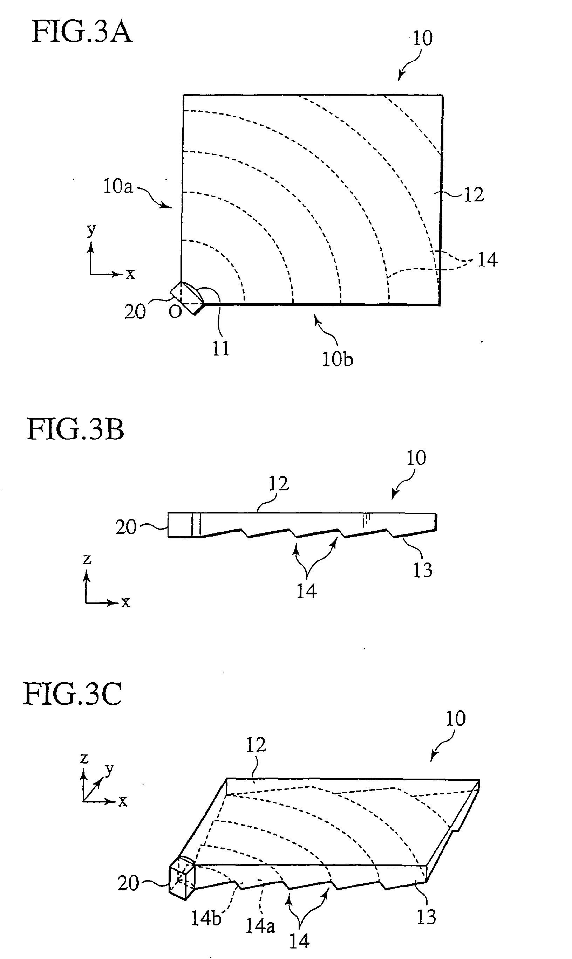

FIGS. 3A, 3B and 3C schematically depict the light guide plate according to the first embodiment. In those drawings, a light emitting diode (LED) 20 providing a light source is shown.

FIG. 3A is a plan view of a light guide plate 10, FIG. 3B provides a front view of the light guide plate 10 and FIG 3C a perspective view of that light guide plate.

The light guide plate 10 has an entry surface 11 into which light from the LED 20 enters, a reflecting surface 13 that reflects incoming light from the entry surface 11 or reflected light from an exit surface 12 and the exit surface 12 that emits light upwards.

More specifically, the light guide plate 10 is comprised of a transparent material having a constant refractive index such as polycarbonate, polyolefine or a resinous acrylic such as PMMA or the like, and is a substantially planar shape with a rectangular shaped upper surface and lower surface.

The entry surface 11 has an r shape (or an arcuate shape) formed at a vertex of the rectangle of the light guide plate. In other words, the entry surface 11 comprises a part of a cylinder of a determined radius extending in the z axial direction of the axis being the vicinity of that angle. Thus, the light from the LED 20 efficiently enters the light guide plate 10.

This entry surface 11 is not restricted to this cylindrical surface and may be a planar surface, in which case it is preferable for this planar surface to be a surface orthogonal to the diagonal line of the rectangular form and parallel to the tangent plane of the cylindrical surface.

The exit surface 13 is formed as a lower surface parallel to the xy planar surface of the light guide plate 10.

The reflecting surface 13 has reflecting grooves (arcuate deflection pattern elements or arcuate grooves) 14 as a plurality of continuous deflection pattern elements, centered on the point o positioned on that angle or vicinity thereof. The reflecting grooves 14 are formed continuing from one of the side surface 10a of the light guide plate 10 to another of the side surfaces 10b. Further, the greater part of the reflecting surface 13 is used for reflecting light, accordingly, the reflecting surface 13 forming the reflecting grooves 14 as in this embodiment, is highly efficient reflecting incoming light in the direction of the exit surface 12, thus a high degree of light utilization efficiency is realized in the light guide plate 10.

The reflecting grooves 14 are not restricted to an arrangement of this concentric circular form and may be of another curved form, such as an elliptical form for example.

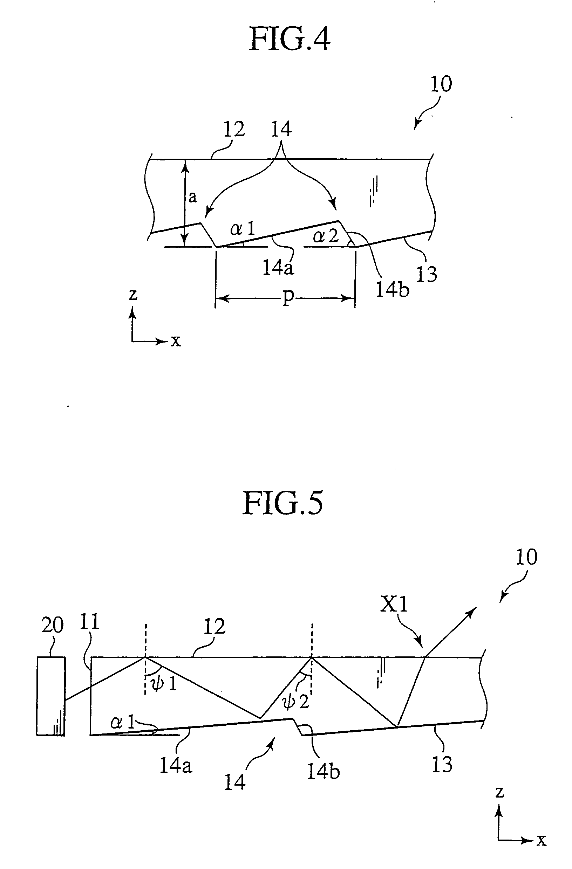

FIG 4 provides a detailed cross-section of the light guide plate 10 including a reflecting groove 14.

As shown in that drawing, the reflecting groove 14 has a first inclined surface 14a being an arcuate inclined surface facing the light source and a second inclined surface 14b. The first inclined surface 14a has a determined finite angle α1 (angle of inclination) with respect to the exit surface 12. In the same manner, the second inclined surface 14b has a determined finite angle α2 (angle of inclination) with respect to the exit surface 12. In this drawing and subsequently, p indicates the width of the reflecting grooves 14.

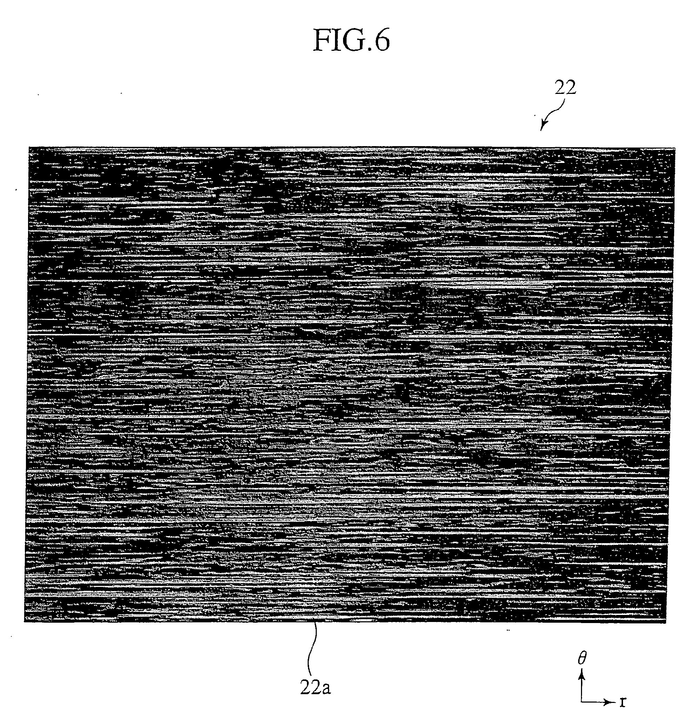

FIG. 5 shows the operation of the first inclined surface 14a.

As shown in FIG 5, the first inclined surface 14a deflects incoming light entering the entry surface 11 at an angle θ1 to the exit surface 12 to an angle of θ2 to the exit surface 12. That is to say, light input to the first inclined surface 14a at an angle to the normal to the exit surface 12 is reflected, the angle to that normal line being reduced.

When the angle of the light deflected by the first inclined surface 14a upward with respect to the normal to the exit surface 12 becomes smaller than a critical angle the light is emitted from the exit surface 12 (in FIG 5 the point x1).

Accordingly, it is preferable that the angle α1 of the first inclined surface 14a to the exit surface 12 is as small as possible. That is to say, to the extent that this angle α1 is small, the light is correspondingly deflected upwards by the reflection from the first inclined surface 14a, and the angle of exit of light emitted from the exit surface 12 is normally substantially equivalent to a critical angle. Accordingly, the direction of light emitted from the exit surface 12 is thus aligned.

The angle α1 (angle of inclination) of the first inclined surface 14a to the exit surface 12 should be between 0.5 degrees and 5 degrees, preferably between 0.5 degrees and 3 degrees, or better still, between 1 degree and 3 degrees.

The second inclined surface 14b does not have the above described function, and while it is preferable in terms of the reflective function that this should be as substantial as possible, from the point of view of easiness in ejecting from a die when forming the light guide plate 10 as described subsequently, an angle below 90 degrees is preferable. For the second inclined surface 14b an angle of between 80 degrees and 90 degrees is preferable, while between 87 degrees and 89 degrees is more preferable still.

Further, the interval p between neighboring reflecting grooves 14 is constant, preferably between 30 and 500 µm, while between 200 and 400 µm is better and between 250 and 300 µm is more preferable still. As the appearance of moire arises due to distortion from cell arrangement of liquid crystal display elements if the interval p is constant, that interval can be random.

The distance a (FIG 4) between the reflecting surface 13 and the emitting surface 12 of the light guide plate 10 should be between 0.3 and 3.0 mm, while between 0.3 and 0.8 mm is better and 0.6 and 0.8 mm is more preferable still.

As shown in FIG 5, in accordance with the configuration as described, light incident to the entry surface 11 from the light emitting diode 20 travels inside the light guide plate 10 while repeatedly undergoing total reflection therein until the angle thereof with respect to the normal line of the exit surface 12 reaches a critical angle at which point the light is emitted from the exit surface 12.

The exit surface 12 is formed on the upper surface of the light guide plate 10 parallel to the xy plane of the light guide plate 10.

A hologram, providing an anisotropic diffusion pattern having anisotropic properties, is formed on the exit surface 12. This hologram is called a surface relief hologram to distinguish it from a three dimensionally formed hologram.

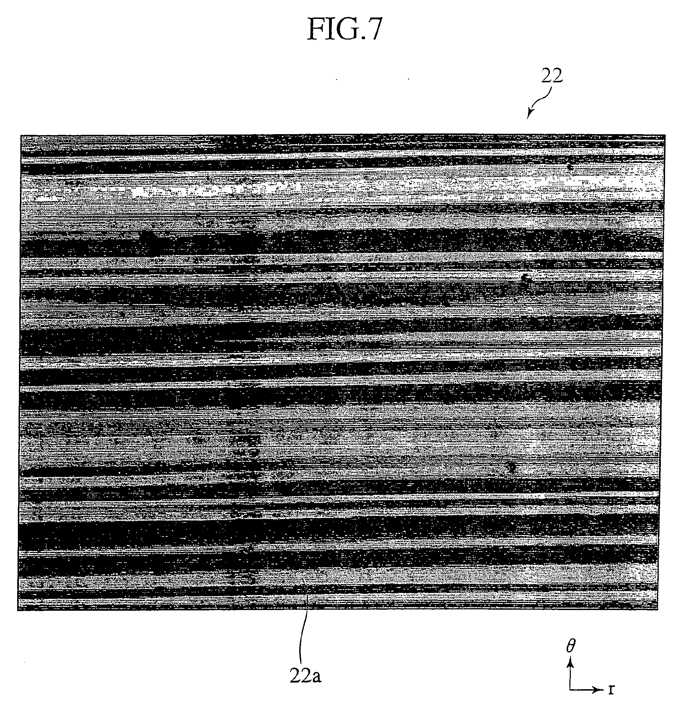

FIGS. 6 and 7 provide an expanded view showing the details of the hologram 22 formed on the exit surface.

FIG. 6 shows the hologram magnified 200 times and FIG 7 shows a still greater magnification of that hologram.

As shown in FIG 6, when viewed at a magnification of 200 times, the hologram has a random speckled region 22a formed of for example, random grooves or random contours, formed of a plurality of random speckles in a line (or an extremely fine elliptical shape) extending following the radial direction r of the reflecting grooves 14 arranged in a concentric circular form, or the regions having a high transparency ratio in comparison to the surrounds or a low transparency ratio in comparison to the surrounds, randomly arranged.

Here, random arrangement means a randomness in which the form and positioning of the speckled regions are not constant on the hologram overall.

As described subsequently, light incoming to the hologram is strongly spread to the peripheral direction in relation to the radial direction by the linear speckles 22a. The ratio of this diffusion between the spread into the peripheral direction in relation to the spread in the radial direction is determined by the dimensions of the long axis and the shorter axis of the speckles.

Further, due to the randomness of the speckles 22a, light entering the hologram 22 is spread and transmitted in random directions, accordingly the hologram functions as a diffuser.

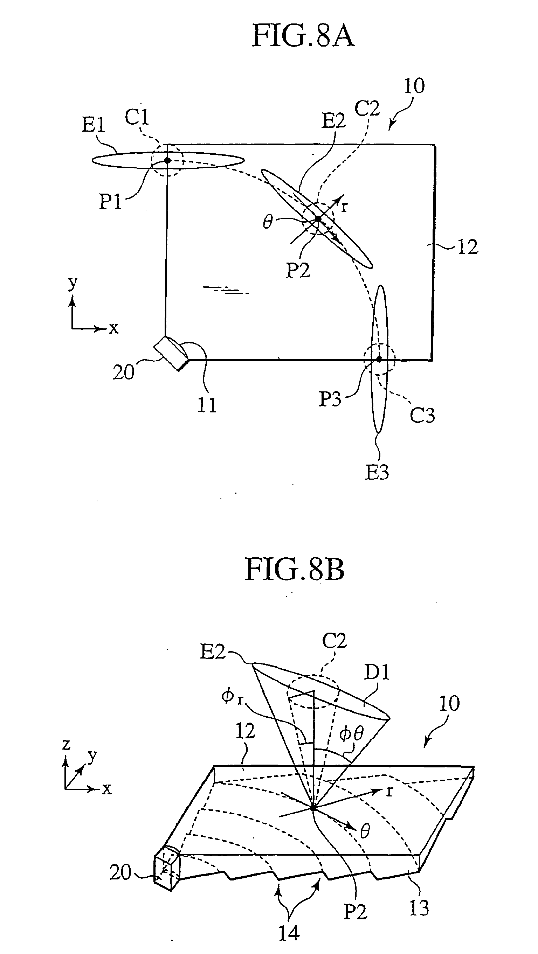

FIGS. 8A and 8B provide a detailed illustration of the operation of the hologram.

FIG. 8A illustrates how the strength of light emitted from the points P1, P2 and P3 of the exit surface 12 of the light guide plate is angle dependent and FIG 8B provides a three-dimensional perspective view showing the strength distribution of light emitted from the point P2 of the exit surface 12 of the light guide plate 10.

Light emitted from the points P1, P2 and P3 of the exit surface 12 of the light guide plate 10, is spread by the hologram formed on the exit surface 12, more strongly in the peripheral direction θ of the arc of the concentric circles in comparison to the radial direction r of that arc, as shown by the ellipses E1, E2 and E3.

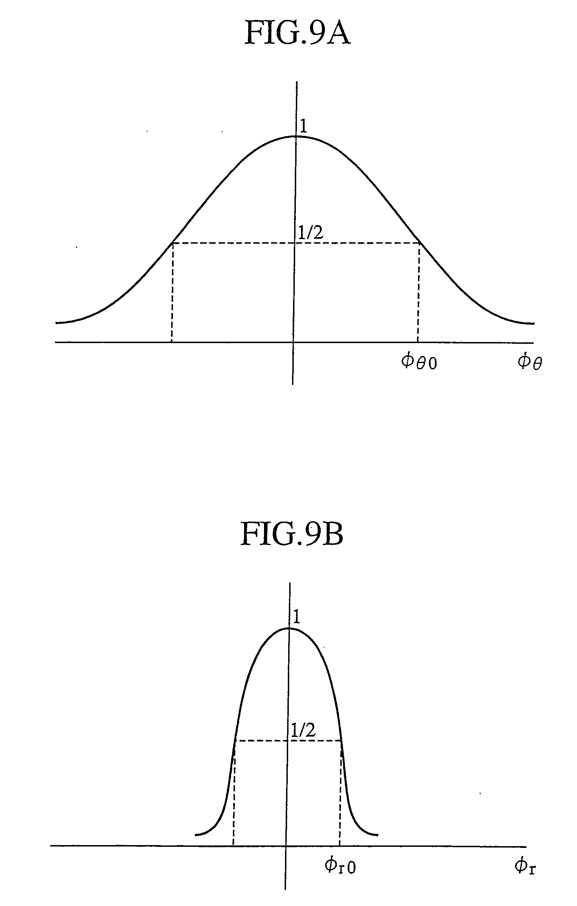

FIGS. 9A and 9B show the strength distribution of that emitted light. FIG 9A shows strength distribution for emitted light in the θ direction and FIG. 9B illustrates the strength distribution for that emitted light in the r direction.

As described above, the light is spread more strongly in the peripheral direction θ in comparison to the radial direction r, the half width Φ_{θ0} of the dispersion angle Φ_{θ} for the θ direction being sufficiently greater than the half width Φᵣ₀ of the dispersion angle Φᵣ for the r direction, (Φ_{θ0} >> Φᵣ₀).

The half width Φᵣ₀ of the r direction should be 0 < Φᵣ₀ ≤ 5, 0 < Φᵣ₀ ≤ 1 being the more preferable still. On the other hand, the half width Φ_{θ0} of the θ direction should be 5 degrees to 70 degrees, preferably 5 degrees to 30 degrees and 5 degrees to 10 degrees being still more preferable.

The ratio of the half width Φ_{θ0} and the half width Φᵣ₀ (or the ratio of the shorter axial direction and the longer axial direction of the ellipses E1, E2 and E3), should be in the range from 1:180 to 1:3.

The points C1, C2 and C3 in FIGS. 8A and 8B are for reference purposes, the strength distribution of light emitted from the points P1, P2 and P3 when diffusion elements that diffuse light isotropically are disposed on the exit surface 12. In this case, light emitted from the exit surface has an isotropic strength distribution as shown by the circular form C1, C2 and C3.

This hologram transmits so as to spread, light emitted from the exit surface 12 greater in the peripheral direction than in the radial direction of the arc of concentric circles.

The same strength distribution of emitted light for the θ direction is realized in the light guide plate 10 due to the anisotropic diffusion operation of this hologram. This prevents the occurrence of bright lines in light emitted from the exit surface 12.

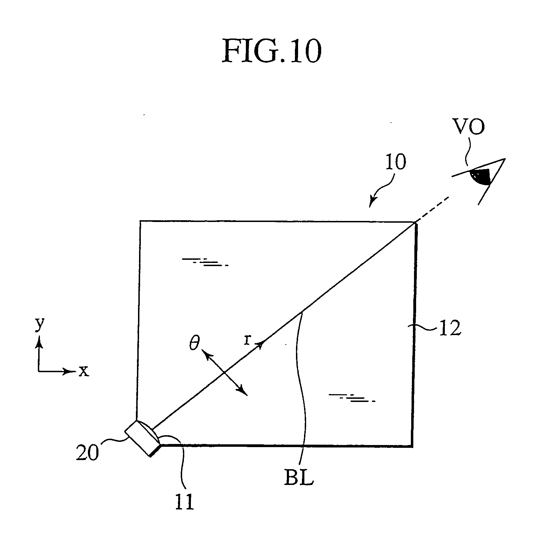

FIG. 10 shows the bright line appearing in light emitted from the exit surface 12 when the isotropic diffusion elements are disposed on the exit surface.

Light reflected by the continuous reflecting grooves 14 of the reflecting surface 13 travels a plurality of paths in reaching the viewing point V0. Accordingly when the light guide plate 10 is seen from the viewing point V0 bright line BL appears over the line joining the light emitting diode 20 and the viewing point V0.

In the case of the light guide plate 10 of this embodiment, the hologram 22 formed on the exit surface 12 diffuses light more strongly (anisotropically) in the θ direction in relation to the r direction. Accordingly when the light source direction is seen from the viewing point V0 the strength of a light ray towards the viewing point V0 is suppressed, preventing the appearance of bright line BL.

Further, according to the above described configuration, as the diffusion angle of emitted light in the r direction is controlled, changes in the critical angle for the r direction from the hologram acting as a diffuser are controlled, thereby enabling consistency in the angle of emission.

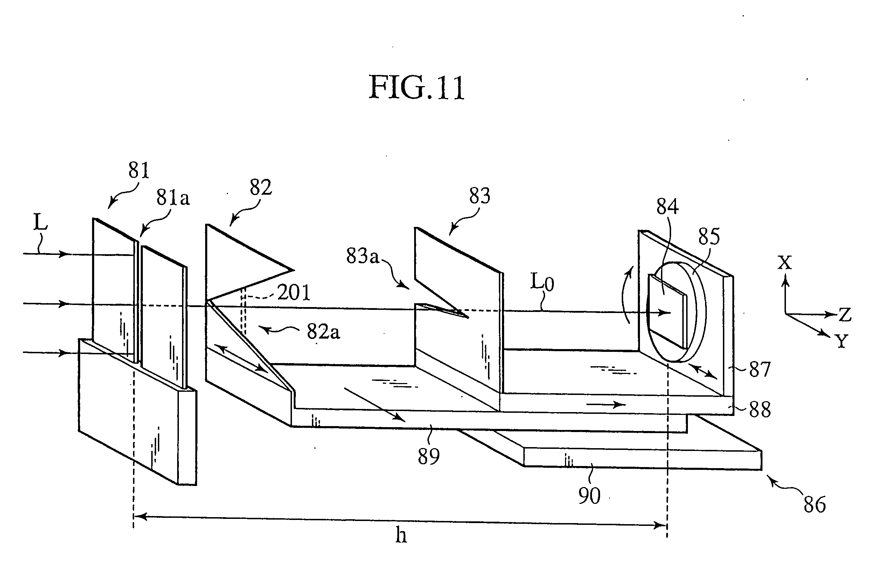

FIG. 11 is a model view showing in outline the configuration of a device for producing the hologram.

This device has a laser light source not shown in the drawing for emitting laser light of a determined wavelength in the Z axial direction, a first shield plate 81 having a first opening 81a of a slit shape (1 mm wide for example) in the X axial direction, a second shield plate 82 having a second opening 22a of a triangular shape spreading open in the Y axial direction, a third shield plate 83 having a third opening 83a of a triangular shape spreading open in the Y axial direction, and round shaped table 85 that secures and rotates a photosensitive film 84 comprised for example of photopolymer, a supporting member 87 that supports the round table 85 enabling the table to rotate freely around the axial center thereof, a first slider 88 that secures and supports the supporting member 87, a second slider 89 that supports the first slider 88 enabling that slider to move freely in the Z axial direction, and a base 90 that supports the second slider enabling that slider to move freely in the Y axial direction. Between the shield plates 82 and 83 an appropriate focusing lens, not shown in the drawing, is disposed.

A diffuser like frost glass that transmits so as to spread, laser light L is disposed in the opening 81a.

The combination of the first and second openings 81a and 82a operates as a linear opening (or long slender rectangular opening) 201 having a determined length in relation to the laser light. That is to say, the linear opening (or long slender rectangular opening) 201 takes the width of the first opening 81a as the narrower side thereof and the distance in the X axial direction on which the second opening 82a overlaps with the first opening 81a as the longer side.

By moving the second slider 89 in the Y axial direction with respect to the base 90, or by moving the shield plate 82 in the Y axial direction in relation to the second slider 89, the length of the linear opening can be changed.

In accordance with the above described configuration a light ray entering the photosensitive film 84 emitted from the linear opening 201 becomes a light beam having a plurality of random speckles the respective cross-sectional forms of which have an oblong linear form (or a long narrow elliptical form).

The third shield plate 83 transmits light beams from among those positioned in the third opening 83a. Accordingly, optical spots from a light beam passing the opening 83a are formed in the position of the photosensitive film 84.

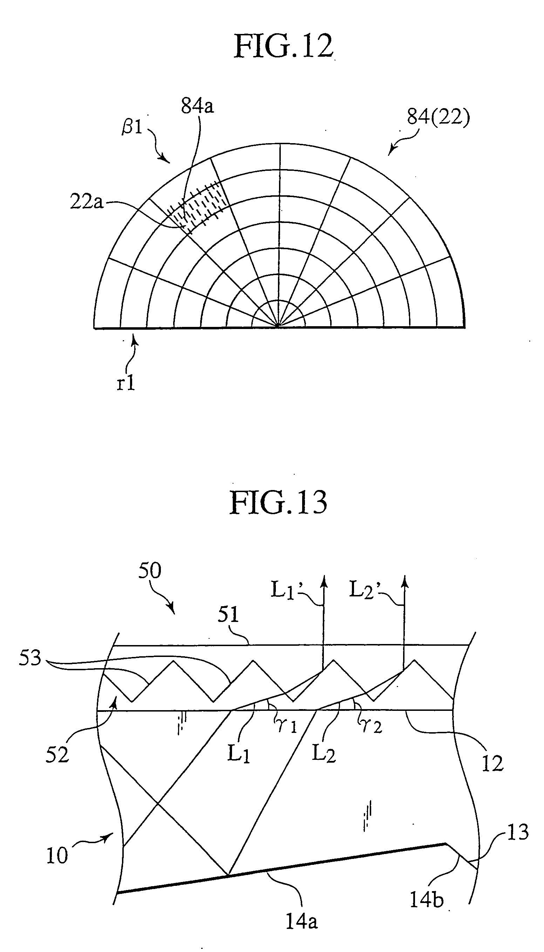

In accordance with this configuration, the optical spot can be formed in the desired peripheral direction location β 1 (FIG. 12) of the photosensitive film 84 as the table 85 is rotated in relation to the supporting member 87. Further, the optical spot can be formed in the desired radial direction location r 1 (FIG. 12) of the photosensitive film 84 by moving the second slider 89 in the Y axial direction in relation to the base 90.

Accordingly, an optical spot of laser light can be formed on the desired region 84a (FIG. 12) of the optical film by rotating the table 85 to the desired location and positioning the supporting member 87 in the desired position in the Y axial direction. When the laser light L passes the first opening 81a this light is spread by the diffuser.

The laser light thus spread by the diffuser forms a plurality of random speckles of a substantially elliptical form (or linear form) on the photosensitive film 84. The average dimensions of the shorter axis and longer axis of these random speckles corresponds respectively to the longer side and the shorter side of the rectangle form, the long side direction being perpendicular to the major axis. More specifically, if the longer side and the shorter side are L and W directions respectively, the average dimensions of the shorter axis and the longer axis become λh / L, λ/ W. Here, λ represents the wavelength of the laser light and h the distance between the opening 81a and the photosensitive film.

Accordingly, by irradiating light spread at the diffuser to the desired region 84a of the photosensitive film a plurality of random speckles can be formed on that region 84a. These random speckles have a long elliptical form or linear form extending in the radial direction of a circle centered around a point of the photosensitive film corresponding to the axial center of the rotatable table 81.

The hologram is produced by repeatedly exposing each of the regions 84a to light thereby performing multiple exposures on each region until the entire photosensitive film 84 has been subject to this exposure process.

If the hologram thus exposed to light is developed, a master hologram with speckles formed by contouring thereon is obtained. The master hologram produced in this way can be transferred to a part of the exit surface of a die used in forming a die for a light guide plate. By using a die having the master hologram transferred thereon for injection mold formation of a light guide plate the hologram can be uniformly formed on the exit surface of the light guide plate.

FIG. 13 shows a part of the backlight device (or surface light source device) having a light guide plate and optical sheet (prism film).

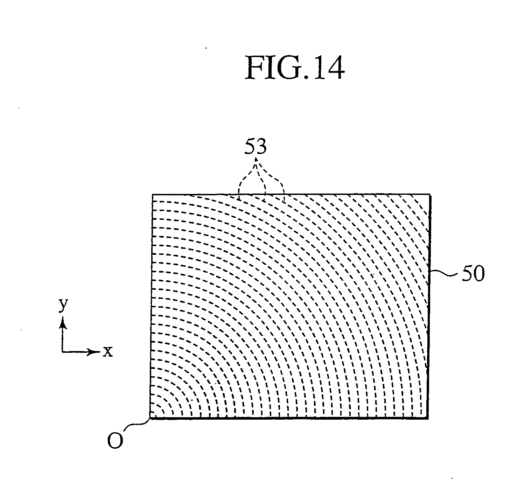

FIG. 14 shows a plan view of the optical sheet.

As shown in FIGS. 13 and 14 an optical sheet (prism film) 50 is of a transparent material such as for example PMMA, polyolefine or polycarbonate, and has a surface 53 comprising a structure of a prism form arranged continuously in concentric circles disposed on the lower surface 52 opposing a planar upper surface 51. This optical sheet may be formed by forming a prism of an optically resistant resinous material on polyethylene terephthalate film for example. This optical sheet 50 is disposed on the exit surface 12 of the light guide plate 10 such that the center of a reflecting groove 14 in concentric circles formed on the reflecting surface 13 of the light guide plate 10 is substantially equivalent to the center of the concentric circles of the optical sheet 50. The prism surface can be facing the light guide plate side or facing the opposite side, but the option can be selected by reference to the relationship between the angle of emitted light from the light guide plate and the apex angle of the prism.

According to the above described configuration, light emitted from the exit surface 12 of the light guide plate 10 and a backlight device having the light guide plate 10 and an optical sheet 50, includes lights L1 and L2 for which elements of the angles γ1 and γ2 to the exit surface 12 are small. In this optical sheet 50, when the lights L1 and L2 for which the angle to the exit surface 12 of the light guide plate 10 is small are input from the lower surface 52, these lights are deflected to an angle large in relation to the upper surface 51 and emitted as L1' and L2'. In this way the optical sheet 50 improves the frontal strength of light emitted from a liquid crystal display device. In an arrangement in which the prism structured face of the optical sheet is disposed facing the opposite direction to the light guide plate side also, the same effects can be achieved by selecting the appropriate apex angle of the prism.

This backlight device (or surface light source device) can be used as a backlight for the liquid crystal display device of a mobile telephone or electronic notebook or the like.

### Second Embodiment

A second embodiment of the present invention will now be described. In this second embodiment a notched surface formed on the side surfaces of one of the vertices of a substantially rectangular shaped light guide plate provides an entry surface, and light incoming to the light guide plate from one of the light sources travels while repeatedly undergoing total reflection inside the light guide plate, and is emitted at a small angle of emission from an exit surface after being reflected at reflecting grooves.

Apart from the reflecting grooves this embodiment has the same configuration as the first embodiment described above, therefore like symbols are used to identify like elements and an explanation of these elements is omitted here.

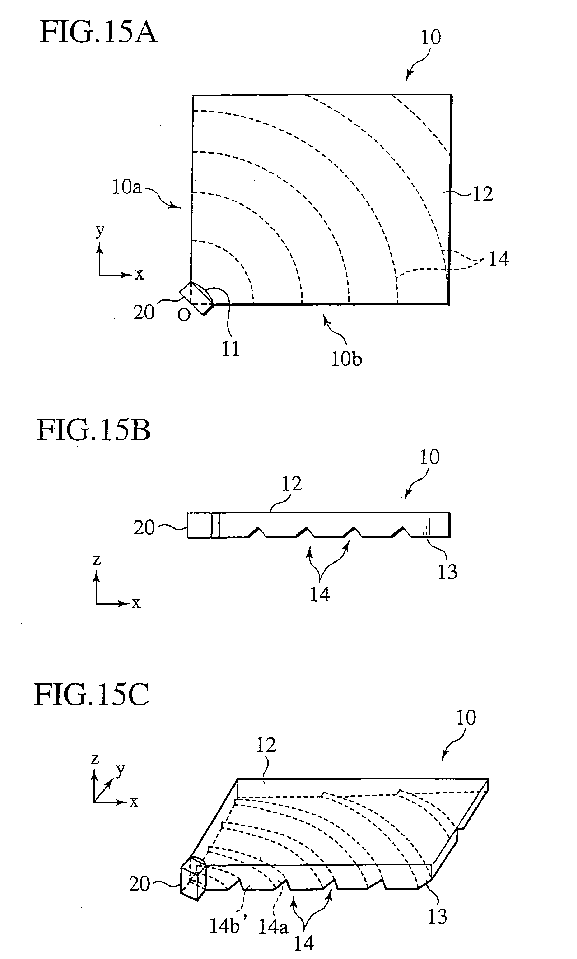

FIGS. 15A, 15B and 15C show in outline, a light guide plate according to the second embodiment of this invention. In those drawings a light emitting diode (LED) 20 providing a light source is shown.

FIG. 15A provides a plan view of the light guide plate 10, FIG. 15B provides a frontal view of that light guide plate and FIG. 15C a perspective view of the light guide plate 10.

The light guide plate 10 comprises an entry surface 11 that receives incoming light from an LED 20, a reflecting surface 13 that reflects incoming light from the entry surface 11 or reflected light from an exit surface 12 and an exit surface 12 that emits light upward.

More specifically, the light guide plate 10 is comprised of a transparent material having a constant refractive index such as polycarbonate, polyolefine or PMMA or the like, having a substantially planar shape of a rectangular shaped upper surface and lower surface.

The entry surface 11 is formed at one of the vertices of the rectangle of the light guide plate. The entry surface 11 comprises a part of a cylinder of a determined radius extending in the z axial direction of the axis being the vicinity of that vertex.

This entry surface 11 is not restricted to this cylindrical surface and may be a planar surface, in which case it is preferable for this planar surface to be a surface orthogonal to the diagonal line of the rectangular form and parallel to the tangent plane of the cylindrical surface. Further, it is preferable that finely contoured forms for spreading light such as prisms or hairlines or the like are formed on the entry surface 11.

The exit surface 13 is formed as a lower surface parallel to the xy planar surface of the light guide plate 10 and has a continuity of a plurality of inclined surfaces 14 arranged in concentric circles centered on the point o positioned on that vertex or vicinity thereof. These inclined surfaces 14 are formed continuing from one of the side surfaces 10a of the light guide plate 10 to another of the side surfaces 10b.

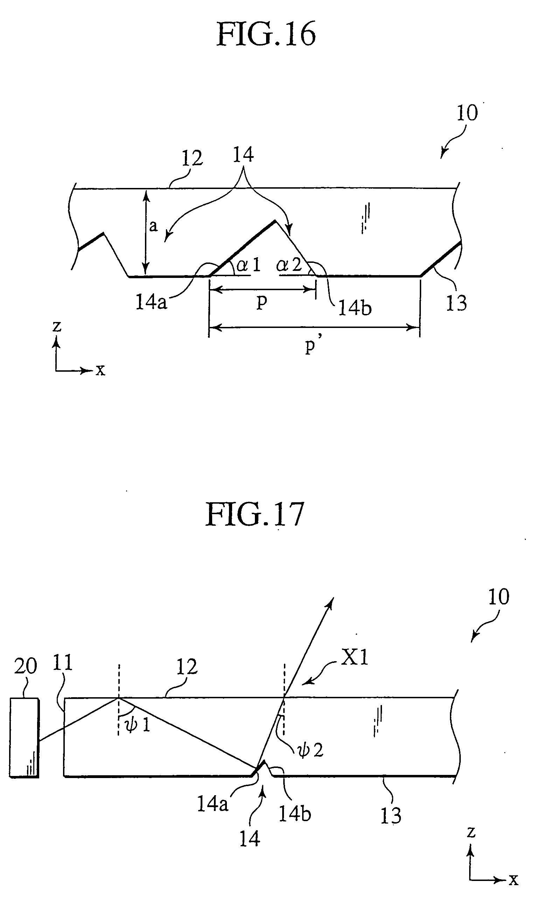

FIG. 16 shows a detailed cross-section of the reflecting surface 13 including an inclined surface 14.

As shown in FIG 16 the reflecting surface 13 consists of a flat part and inclined surface 14 arranged alternately. This inclined surface 14 has a first inclined surface 14a facing a light source and a second inclined surface 14b facing the opposite direction to the light source. The first inclined surface 14a has a determined finite angle α1 (angle of inclination) with respect to the reflecting surface 13. In the same manner, the second inclined surface 14b has a determined finite angle α2 (angle of inclination) with respect to the reflecting surface 13. In this drawing and subsequently, the symbols p and p' represent respectively the interval (pitch) and width of the reflecting grooves 14.

In FIG. 16 the first inclined surface 14a and second inclined surface 14b are drawn so as to have a concave part with respect to the reflecting surface 13 however it is also suitable for these to be formed having a convex part with respect to the reflecting surface 13.

FIG. 17 illustrates the operation of the first inclined surface 14a.

As shown in FIG. 14, the first inclined surface 14a deflects incoming light entering the entry surface 11 at an angle Ψ1 to the exit surface 12 to an angle of Ψ2 to the exit surface 12.

Here, as α1 is in the range of 40 degrees to 50 degrees, light at the first inclined surface 14a is emitted from the exit surface 12 as the angle with respect to the normal to the exit surface 12 becomes smaller than a critical angle. This emitted light is emitted at an angle close to the direction of the normal to the exit surface 12. Accordingly, even though this light guide plate does not use deflecting film such as a prism sheet or the like, backlight having high frontal brightness (degree of brightness in the direction of the normal to the exit surface 12) can be obtained. At the planar part, the angle of light with respect to that normal line does not change, thus this light continues being directed within the light guide plate 10 without being emitted from the exit surface 12.

It is preferable, from the point of view of easiness in ejecting from a die when forming the light guide plate 10 as described subsequently, that the second inclined surface 14b be at an angle of below 90 degrees. An angle of between 80 degrees and 90 degrees is more suitable, while between 87 degrees and 89 degrees is more preferable still.

Further, as shown in FIG. 16, the interval p' between neighboring reflecting grooves 14 can change in each place in accordance with the distance from the light source as required to obtain uniform light emission distribution. Alternatively, the interval p' can be constant, while the width p of the reflecting protruding parts or reflecting grooves can be changed in each place in response to the distance from the light source. In this case, the depth of the reflecting groove or height of the reflecting protruding part changes in each place.

### Third Embodiment

The third embodiment of the present invention will now be described. In this third embodiment, one of the side surfaces of a substantially rectangular shaped light guide plate provides the entry surface, and light incoming to the light guide plate from a plurality of light sources travels inside the light guide plate while repeatedly undergoing total reflection, the angle of this light rising gradually as the light is reflected at reflecting grooves, as this angle becomes gradually smaller in relation to the exit surface until the light is emitted from the exit surface when a critical angle is reached.

Except for the light sources and reflecting grooves the configuration of this embodiment is the same as that of the first embodiment, thus like symbols are used to identify like elements and a description of those elements is omitted here.

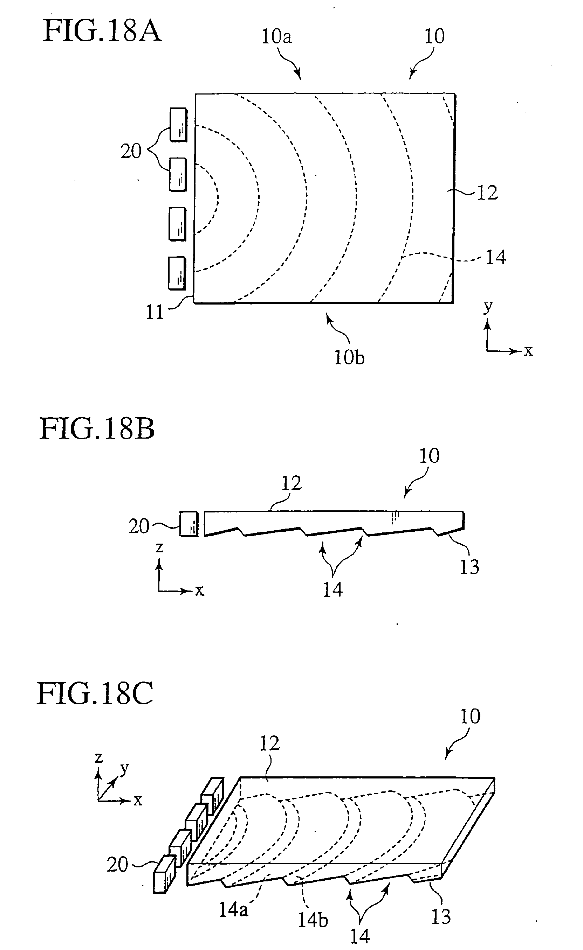

FIGS. 18A, 18B and 18C show in outline the light guide plate according to this third embodiment. In those drawings, four light emitting diodes (LED) 20 providing light sources are shown.

FIG. 18A is a plan view of a light guide plate 10, FIG. 18B is a front few of that light guide plate and FIG 18C is a perspective view of the light guide plate 10.

The light guide plate 10 has an entry surface 11 into which light from the LED 20 enters, a reflecting surface 13 that reflects incoming light from the entry surface 11 or reflected light from an exit surface 12 and the exit surface 12 that emits light upwards.

More specifically, the light guide plate 10 is comprised of a transparent material having a constant refractive index such as polycarbonate, polyolefine or PMMA or the like, and has a substantially planar shape of a rectangular shaped upper surface and lower surface.

The entry surface 11 is substantially orthogonal to the reflecting surface 13 and the exit surface 12. Light emitted from four light emitting diodes 20 disposed at equidistant intervals in a straight line in relation to the entry surface 11, enters the light guide plate 10 from the entry surface 11.

The exit surface 13 is formed as a lower surface parallel to the xy planar surface of the light guide plate 10.

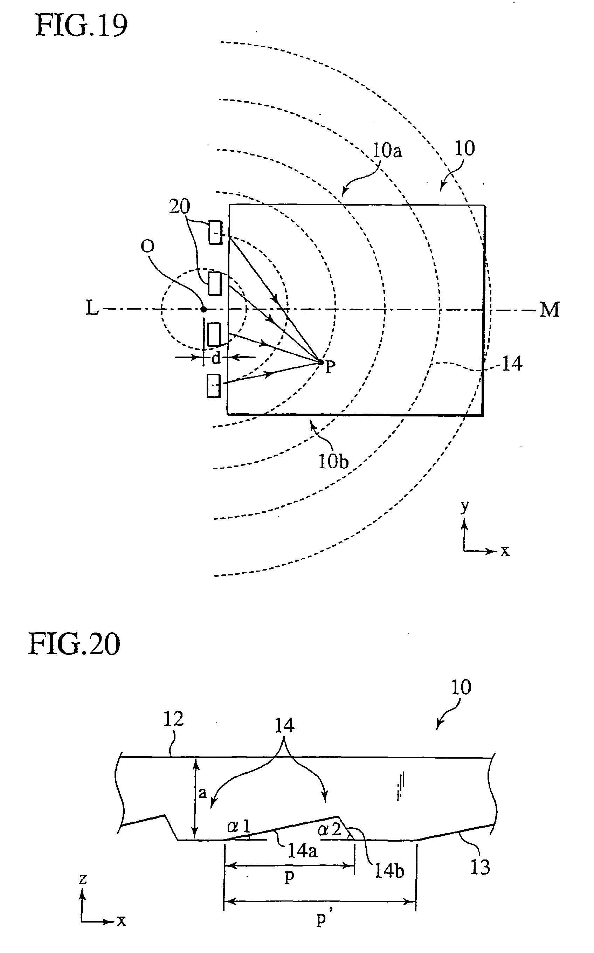

FIG. 19 shows in detail the arrangement of a reflecting groove of the deflection pattern elements formed on the reflecting surface 13.

The reflecting surface 13 has reflecting grooves (arcuate deflection pattern elements or arcuate grooves) consisting of a plurality of continuous deflection pattern elements disposed in concentric circles centered on the point O having a distance d from the entry surface 11, over the straight-line LM that substantially equally divides the entry surface 11 and the exit surface 13. Here, the distance d is small in comparison to the dimensions of the entry surface 11, these dimensions being for example the width of the entry surface 11 from one of the side surfaces 10a to the other side surface 10b.

The center of the concentric circles O need not necessarily be disposed over the straight-line LM and may for example be positioned in the vicinity of the straight-line LM, in the entry surface 11 or the vicinity thereof.

These reflecting grooves 14 are not restricted to this concentric circular form and may be of another curved form, such as an elliptical form for example.

The four light emitting diodes 20 providing light sources in this embodiment are disposed opposing the entry surface 11. The center O of the concentric circles of the reflecting grooves 14 of the deflection pattern is located in the vicinity of the straight-line LM, in the entry surface 11 or the vicinity thereof so that light incoming to the entry surface 11 from the light emitting diodes 20 can be efficiently reflected. As the reflecting grooves 14 are formed in an arrangement of concentric circles in this way, the light entering the exit surface 11 from the light emitting diodes 20 can be efficiently reflected.

This point will now be explained in more detail with reference to FIG. 19. In FIG. 19, the paths traveled by each of the lights before reaching the point P after emission from the respective light emitting diodes having been considered, the forward direction of each of those lights is different. When the reflecting grooves are formed perpendicular in relation to the forward direction of the light the best reflecting efficiency is obtained, however if the direction of a reflecting groove on the point P is formed so as to be perpendicular in relation to light emitted from a specific light emitting diode the efficiency of reflection of light from another light emitting diode deteriorates markedly, resulting in an overall decreased rate of deflection efficiency. If a reflecting groove is formed so as to be perpendicular in relation to a line connecting the point O and the point P light emitted from all of the light emitting diodes can be reflected to an equal degree thereby realizing an improvement in overall reflection efficiency. Even if the position of the point P is changed, the same argument applies, so it is also suitable for a reflecting groove to be located on the concentric circles centered around the point O.

The properties of reflection efficiency of the light guide plate 10 can be adjusted by adjusting the distance d between the center of the concentric circles and the entry surface 11.

The reflecting grooves 14 are formed continuously on a reflecting surface formed from the entry surface 11 to the entry surface 11 or from one side surface 10a to the other side surface 10b. Further, the greater part of the reflecting grooves 14 are used for reflecting light, accordingly the reflecting surface 13 on which the reflecting grooves 14 are formed in accordance with this embodiment, provides a high degree of efficiency in reflecting incoming light in the direction of the exit surface 12 thereby enabling a high degree of efficiency in the utilization of light in this light guide plate 10.

FIG. 20 is an expanded cross-sectional view of the light guide plate 10 including reflecting grooves 14.

FIG. 20 shows an example in which a planar part is disposed between a reflecting groove and a reflecting groove. Here, rather than a reflecting groove (concave form in relation to the light guide plate) a reflective protruding part (convex form in relation to the light guide plate) is also suitable. In FIG. 20 (and subsequently) the symbol p' indicates the interval (pitch) and width of reflecting grooves 14.

FIG. 20 shows an example in which a planar part is disposed however it is also suitable to have an example as that shown in FIG. 4 in which there is no such planar part.

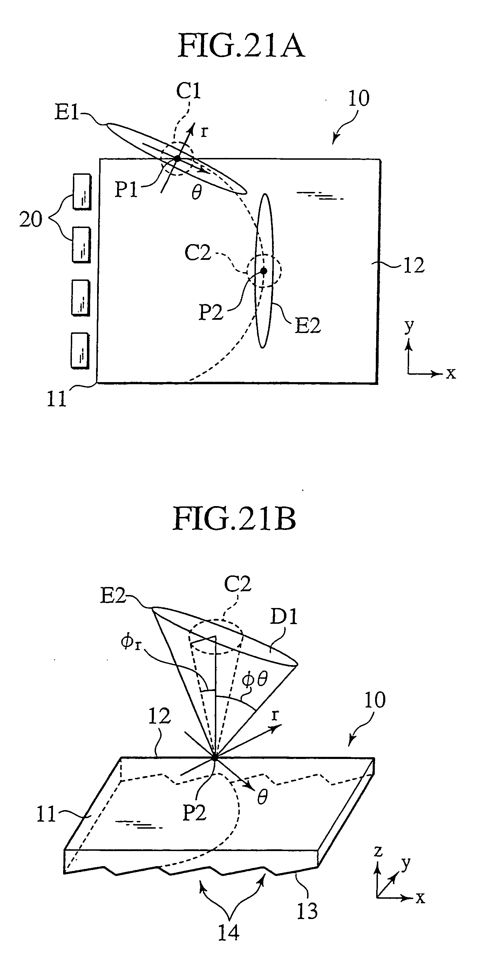

FIGS. 21A and 21B provide a detailed explanation of the operation of the hologram according to this embodiment.

FIG. 21A provides a plan view showing how the strength of light emitted from the points P1, P2 and P3 of the exit surface 12 of the light guide plate is angle dependent. FIG. 21B provides a three-dimensional perspective view depicting the strength distribution of light emitted from the point P2 of the exit surface 12 of the light guide plate 10.

Light emitted from the points P1 and P2 of the exit surface 12 of the light guide plate 10 is spread more strongly in the peripheral direction θ in relation to the radial direction r of the arc of the concentric circles as shown by the ellipses E1 and E2, by the hologram formed on the exit surface 12.

The circles C1 and C2 in FIGS. 21A and 21B illustrate, for reference purposes, the strength distribution of light emitted from the points P1 and P2 when isotropic diffusion elements are disposed on the exit surface 12. Here, the light emitted from the exit surface has isotropic strength distribution as shown by the circles C1 and C2.

In short, this hologram transmits so as to spread, light emitted from the exit surface 12 more in the peripheral direction in relation to the radial direction of the arc of the concentric circles.

As this hologram operates to realize anisotropic diffusion, equal strength distribution of emitted light in the θ direction is realized in this light guide plate 10. Moreover, bright line in the light emitted from the exit surface 12 is prevented.

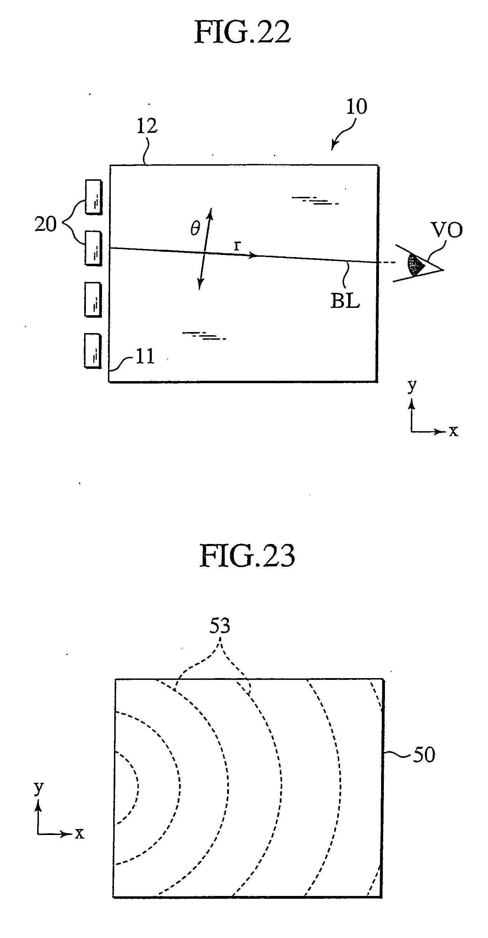

FIG. 22 shows the bright line in light immediately prior to input in the hologram.

Light reflected at the continuous reflecting grooves 14 on the reflecting surface 13 travels a plurality of paths before reaching the viewing point V0. Accordingly when the light guide plate 10 is viewed from the viewing point V0 a bright line BL appears over the line joining the light emitting diode 20 and the viewing point V0.

In the light guide plate 10 according to this embodiment, the hologram 22 formed on the exit surface 12 spreads light strongly (anisotropically) in the θ direction in comparison to the r direction. Accordingly, when the light source direction is viewed from the viewing point V0 the strength of a light ray towards the viewing point V0 is suppressed and the appearance of the bright line BL is prevented.

Further, according to this configuration, as the angle of spread of emitted light in the r direction is suppressed, this suppresses changes in the critical angle of the r direction occurring through the hologram acting as a diffuser, therefore consistency of the angle of emission is maintained.

FIG. 23 is a plan view showing an optical sheet.

As shown in FIG. 13 and FIG. 23 the optical sheet (prism film) 50 is of a transparent material such as for example PMMA, polyolefine or polycarbonate, and has a surface 53 comprising a structure of a prism form arranged continuously in concentric circles disposed on the lower surface 52 opposing a planar upper surface 51. This optical sheet may be formed by forming a prism of an optically resistant resinous material on polyethylene terephthalate film for example. This optical sheet 50 is disposed on the exit surface 12 of the light guide plate 10 such that the center of a reflecting groove 14 formed in concentric circles on the reflecting surface 13 of the light guide plate 10 is substantially equivalent to the center of the concentric circles of the optical sheet 50. The prism surface can be facing the light guide plate side or facing the opposite side, but the alternative can be selected by reference to the relationship between the angle of emitted light from the light guide plate and the apex angle of the prism.

According to the above described configuration, light emitted from the exit surface 12 of the light guide plate 10 and a backlight device having the light guide plate 10 and an optical sheet 50, includes lights L1 and L2 for which elements of the angles γ1 and γ2 to the exit surface 12 are small. In this optical sheet 50, when the lights L1 and L2 for which the angle to the exit surface 12 of the light guide plate 10 is small are input from the lower surface 52, these lights are deflected to an angle large in relation to the upper surface 51 and emitted as L1' and L2'. In this way the optical sheet 50 improves the frontal strength of light emitted from a liquid crystal display device. In an arrangement in which the prism structured face of the optical sheet is disposed facing the opposite direction to the light guide plate side also, the same effects can be achieved by selecting the appropriate apex angle of the prism.

This backlight device (or surface light source device) can be used as a backlight for the liquid crystal display device of a mobile telephone or electronic notebook or the like.

### Fourth Embodiment

A fourth embodiment of the present invention will now be described. The reflecting surface of this fourth embodiment has a planar part and reflecting grooves. One side surface of a substantially rectangular shaped light guide plate provides the entry surface and light incoming from a plurality of light sources travels inside the light guide plate while repeatedly undergoing total reflection between the exit surface and the planar part of the reflecting surface, before being emitted substantially perpendicularly from the exit surface once reflected at the inclined parts of reflecting grooves.

Except for the reflecting surface the configuration of this embodiment is the same as that of the third embodiment, thus like symbols are used to identify like elements and a description of those elements is omitted here.

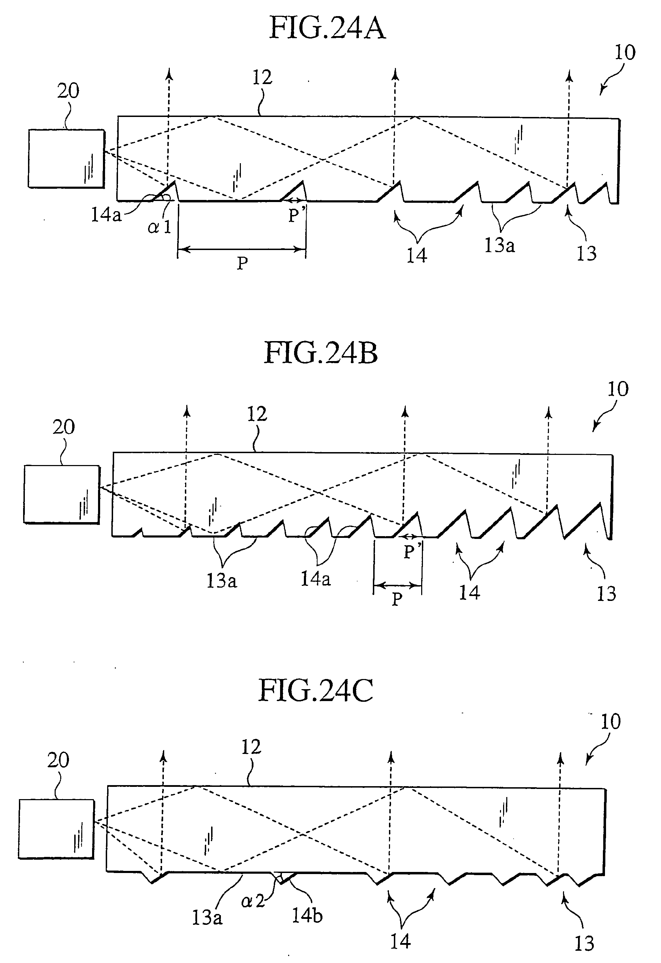

FIGS. 24A, 24B and 24C show a cross-section of the light guide plate according to this fourth embodiment. The plan and perspective views of the light guide plate of this fourth embodiment are the same as the views of the first embodiment provided in FIG. 3A and FIG 3C respectively.

FIG 24A is a cross-sectional view showing a third example of this fourth embodiment.

As shown in FIG 24A a reflecting surface 13 has a planar part 13a parallel to an exit surface 12 and reflecting groove 14 having a first inclined surface 14a inclined (not parallel) with respect to the exit surface 12. As shown in FIG. 3A, the first inclined surface 14a forms an arcuate inclined surface (arcuate deflection pattern elements) arranged continuously, without interruption in concentric circles. Here, if the refractive index n of the light guide plate 10 is approximately 1.5 (n = 1.5) the angle α1 between the first inclined surface 14a and the exit surface 12 is set at 43 degrees (α1 = 43 degrees).

According to this example, the width p' of the reflecting groove 14 is maintained constant, while the pitch p of the reflecting grooves 14 is set small to the extent that the distance from the light emitting diode 20 is large.

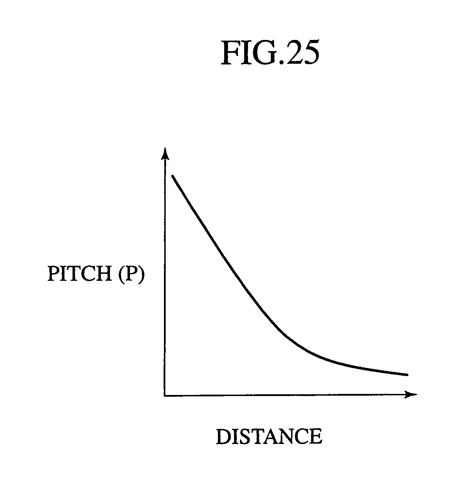

FIG. 25 shows the characteristics of dependency of the pitch of a reflecting groove on distance from a light emitting diode.

As shown in FIG 25, for this first example, the pitch p of the reflecting groove 14 decreases in conformance to the distance from the light emitting diode 20 light source. That is to say, the distribution of the reflecting grooves 14 on the reflecting surface 13 becomes dense as the distance from the light emitting diode 20 increases. On the other hand, the width p' of a reflecting groove 14 is constant.

According to this configuration, light incoming to the light guide plate 10 from the entry surface 11 travels while repeatedly undergoing total reflection between the planar part 13a of the reflecting surface 13 and the exit surface 12, and once reflected at the first inclined surface 14a of the reflecting grooves 14, the light is emitted from the exit surface 12 substantially perpendicularly, in other words emitted from the exit surface 12 at an angle (exit angle) of a small value.

This exit angle should preferably be below 5 degrees, below 3 degrees is better, below 1 degrees being more preferable still and below 0.5 degrees being most preferable.

Here, light elements traveling while undergoing total reflection within the light guide plate 10 reach the first inclined surface 14a of a reflecting groove 14 and are successively reflected before being emitted from the exit surface 12. Accordingly, as the distance from the light emitting diode 20 becomes larger, the quantity of light becomes increasingly smaller. Thus, if the ratio of light traveling inside the light guide plate 12 reflected at the reflecting surface 12 is the same, light emitted from the exit surface 12 becomes weaker as that distance from the light emitting diode 20 becomes larger.

In this example, the width p' of reflecting groove 14 is maintained constant, the pitch p of the reflecting groove is smaller to the extent that the distance from the light source increases and the distribution of the reflecting groove 14 is set so as to be dense (refer FIG 25). As the distribution of the reflecting grooves 14 becomes dense, the ratio of the distribution of the first inclined surfaces 14a of the reflecting grooves 14 becomes progressively large.

Accordingly, the proportion of light traveling inside the light guide plate 10 that is reflected by the reflecting grooves 14 increases in conformance to the distance from the light source. In this example this characteristic is utilized such that by setting this dependence of pitch p in relation to distance from light source appropriately, uniform light is emitted from the exit surface 12 regardless of that distance from light source. This dependence can be set appropriately in relation to the distribution of incident light from the light emitting diode 20 providing the light source or a variety of parameters, refractive index or the like, of the light guide plate 10.

FIG. 24B shows a second example of the light guide plate according to the fourth embodiment of the present invention.

According to this example, the pitch p of the reflecting grooves 14 is maintained constant, while the width p' of the reflecting grooves 14 is set larger to the extent that the distance from the light emitting diode 20 is large. As this width p' of the reflecting grooves 14 increases the area of the first inclined surface 14a of the reflecting grooves 14 also increases in conformance with the distance from the light source.

In the same manner as described above, with this example, light travels while undergoing total reflection within the light guide plate 10, the quantity of light gradually decreasing as the distance from the light guide source increases. Here, as the width p of the reflecting grooves 14 increases as this distance from the light source increases, the proportion of light traveling within the light guide plate 10 that is reflected by the reflecting grooves 14 increases in conformance with that distance. This characteristic is utilized in this example such that by setting this dependence of width p' in relation to distance from light source appropriately, uniform light is emitted from the exit surface 12 regardless of that distance from light source.

FIG. 24C shows a third example of the light guide plate according to the second embodiment of the present invention.

This example has a reflecting groove (or reflecting protruding part) 14 of a convex shape in relation to the planar part 13a of the reflecting surface 13. As shown in FIG. 3A, the second inclined surface 14b forms an arcuate inclined surface (arcuate deflection pattern elements) formed in an uninterrupted continuous succession of concentric circles. Apart from this reflecting groove 14, this example has the same configuration as the first and second examples.

Light traveling in the light guide plate 10 undergoing repeated total reflection between the planar part 13a of the reflecting surface 13 and the exit surface 12 is emitted from the exit surface 12 after being reflected at the second inclined surface 14b of the reflecting groove 14 having angle α2 to the exit surface 12. Here, the width p' of the reflecting groove 14 or pitch p can be set at the appropriate distance from the light emitting diode 20 such that uniform light is emitted from the exit surface 12.

Although the invention has been described above by reference to certain exemplary embodiments of the invention, the invention is not limited to the embodiments described above. Modifications and variations of the embodiments described above will occur to those skilled in the art, in light of the above teachings. Further, the values shown in the examples provided examples and are not restrictive.

For example, a point light source is suitable, and a one chip LED, two chip LED or multi-chip LED may be used. Again, the shape of the reflecting grooves is illustrative and not restrictive and an appropriate curved form, for example an ellipsoid, may be used.

### FIELD OF INDUSTRIAL APPLICATION

The light guide plate related to the present invention is useful for guiding light emitted from a light source to a liquid crystal display device for illuminating the liquid crystal display device of a mobile telephone device or the like. Further, the backlight device related to the present invention furnishes the light guide plate, and is useful for illuminating the rear surface of a liquid crystal display device.

## Claims

1. A light guide plate having an entry surface at the side surface and an exit surface on the upper surface or the lower surface, the light guide plate comprising:
a deflection pattern disposed on the surface opposing the exit surface that receives a ray of light incoming from the entry surface or the exit surface at a certain angle to the normal to the exit surface of the light guide plate and outputs the ray of light at a reduced angle to the normal, the deflection pattern having a plurality of arcuate deflection pattern elements formed conforming to a plurality of concentric circles; and
an anisotropic diffusion pattern disposed on the exit surface, that transmits so as to spread, a ray of light incoming from the deflection pattern at an angle up to a specified angle with respect to the normal to the exit surface such that the peripheral direction of the light ray is larger in comparison to the radial direction of the arcs of the concentric circles.

2. The light guide plate according to claim 1 wherein each deflection pattern elements comprises an arcuate groove or an arcuate protruding part.

3. The light guide plate according to claim 1 wherein each deflection pattern elements comprises an arcuate inclined surface.

4. The light guide plate according to claim 1 wherein the deflection pattern elements comprises the plurality of arcuate inclined surfaces each respectively formed in conformance to a plurality of concentric circles.

5. The light guide plate according to claim 4 wherein the arcuate inclined surfaces are disposed on an arcuate groove or an arcuate protruding part.

6. The light guide plate according to claim 1 wherein the anisotropic diffusion pattern comprises a surface relief hologram.

7. The light guide plate according to claim 1 wherein the light guide plate has a substantially rectangular form and the center of the plurality of concentric circles is positioned at a vertex of the rectangle or in the vicinity thereof.

8. The light guide plate according to claim 1 wherein the light guide plate has a notched surface as the entry surface at a vertex of the substantially rectangular form.

9. The light guide plate according to claim 8 wherein the entry surface comprises a cylindrical form.

10. A backlight device comprising:
the light guide plate according to claim 1; and
a prism film having a plurality of refractive surfaces each formed conforming to the plurality of concentric circles, each refractive surface of the prism film deflecting light from the exit surface in the direction of the normal to of the exit surface.

11. A backlight device according to claim 10 comprising effectively one light emission point at a vertex of the light guide plate according to claim 7 or in the vicinity thereof.

12. A backlight device according to claim 11 wherein the effectively one light emission point is comprised of one LED.

13. A light guide plate comprising:
a plurality of circular reflecting grooves each respectively formed in conformance with a plurality of concentric circles; and
an exit surface integratedly formed with a surface relief hologram that transmits so as to spread, light reflected from each of the circular reflecting grooves such that the peripheral direction of the reflected light is larger in comparison to the radial direction of the concentric circles.

14. The light guide plate according to claim 1 or claim 13 wherein the circular reflecting groove forms a continuous uninterrupted groove and the circular reflecting groove has an arcuate inclined surface facing the light source.

15. The light guide plate according to claim 1 or claim 13 wherein the angle of inclination α1 in relation to the planar surface of the light guide plate on the arcuate inclined surface side is between 0.5 degrees and 5 degrees such that after the light input from the entry surface on the side surface has been reflected a determined number of times at the upper and lower surfaces, the angle of incidence thereof in relation to the exit surface is below a critical angle and is emitted from the exit surface.

16. The light guide plate according to claim 1 or claim 13 wherein the aspect ratio of a light ray of the spread light is within the range from 1: 180-1: 3.

17. The light guide plate according to claim 1 or claim 13 wherein the surface relief hologram comprises a plurality of random speckle regions of long linear form extending in the radial direction of the concentric circles.

18. The light guide plate according to claim 1 or claim 13 further comprising a prism sheet that deflects the transmitted and spread light in the direction of the normal to the planar surface of the light guide plate.

19. A light guide plate of planar shape into which light from an entry surface formed in the vicinity of one of the vertices of the planar shape is input and then output from an exit surface, the light guide plate comprising:
a reflecting groove formed on the surface opposing the exit surface, extending in a continuous arrangement in conformance to the perimeter of a circle the center of which is the vicinity of the vertex, that reflects the light input to the entry surface to the exit surface; and
a diffuser formed on the exit surface that spreads the light reflected at the reflecting groove such that the peripheral direction of the light is larger in comparison to the radial direction of the perimeter.

20. The light guide plate according to claim 19 wherein the diffuser is a hologram comprising a plurality of speckles the lengthwise direction of which is the radial direction of the perimeter.

21. The light guide plate according to claim 19 wherein the entry surface is formed in a cylindrical form the axis of which is in the direction of the normal orthogonal to the exit surface.

22. A backlight device comprising the light guide plate according to claim 21,
wherein the distance between the light emission point of the light source and the entry surface of the light guide plate is below 0.35 mm.

23. A light guide plate of rectangular form comprising an exit surface and a reflecting surface opposing the exit surface,
wherein the reflecting surface has a plurality of uninterrupted, continuing inclined surfaces disposed in the form of concentric circles, the angle of inclination α1 of the inclined surfaces to the reflecting surface being between 40 degrees and 50 degrees,
the center of the concentric circles is positioned at a vertex of the rectangular form of the light guide plate or in the vicinity thereof,
the exit surface has an anisotropic diffusion pattern that transmits so as to spread, a ray of light reflected at the inclined surfaces at an angle up to a specified angle with respect to the normal to the exit surface, and
the anisotropic diffusion pattern spreads a ray of light reflected at the inclined surfaces such that the width of diffusion thereof in a direction orthogonal to the radial direction of the arcs of the concentric circles is larger than that in the radial direction.

24. The light guide plate according to claim 23 wherein the reflecting surface comprises a planar surface part disposed between each the inclined surface.

25. The light guide plate according to claim 23 wherein the pitch of the inclined surface is reduced in accordance with the distance of separation of that inclined surface from the light emitting source.

26. The light guide plate according to claim 23 wherein the anisotropic diffusion pattern comprises a surface relief pattern.

27. The light guide plate according to claim 26 wherein the surface relief hologram comprises a plurality of random speckle regions of long linear form extending in the radial direction of the concentric circles.

28. A backlight device using the light guide plate according to any of claims 23 to 27.

29. A backlight device according to claim 28 comprising a light emitting point at one of the vertices of the rectangle of the light guide plate or the vicinity thereof.

30. A backlight device according to claim 29 wherein the light emitting point comprises an LED.

31. A light guide plate comprising an entry surface of at least one side surface, a rectangular exit surface orthogonal to the entry surface and a reflecting surface,
wherein the reflecting surface has a deflection pattern that receives a ray of light incoming from the entry surface or the exit surface at a certain angle to the normal to the exit surface and outputs the ray of light at a reduced angle to the normal,
the deflection pattern has a plurality of arcuate deflection pattern elements formed on a plurality of concentric circles,
the exit surface has an anisotropic diffusion pattern that transmits so as to spread, a ray of light incoming from the deflection pattern at an angle up to a specified angle with respect to the normal to the exit surface and
the anisotropic diffusion pattern spreads the ray of light incoming from the deflection pattern such that the width of diffusion in a direction orthogonal to the radial direction of arcs of the concentric circles is larger than that in the radial direction.

32. The light guide plate according to claim 31 wherein the center of the concentric circles is positioned on any one of the side surfaces of the light guide plate or in the vicinity thereof.

33. The light guide plate according to claim 31 wherein the deflection pattern elements comprises an arcuate shaped groove or an arcuate shaped protruding part.

34. The light guide plate according to claim 31 wherein the deflection pattern elements comprises an arcuate inclined surface.

35. The light guide plate according to claim 31 wherein the deflection pattern elements comprise a plurality of arcuate inclined surfaces respectively formed in conformance to the plurality of concentric circles.

36. The light guide plate according to claim 35 wherein the arcuate inclined surfaces are disposed on an uninterrupted continuous groove or continuous protruding part and in relation to the exit surface, the arcuate inclined surfaces are inclined in the light source direction.

37. The light guide plate according to claim 36 wherein the angle of inclination of the arcuate inclined surfaces to the exit surface is between 0.5 degrees and 40 degrees.

38. The light guide plate according to any of claims 31 to 37 wherein the anisotropic diffusion pattern comprises a surface relief hologram.

39. The light guide plate according to claim 38 wherein the surface relief hologram comprises a plurality of random speckle regions of long linear form extending in the radial direction of the concentric circles.

40. A light guide plate comprising an entry surface of at least one side surface, a substantially rectangular exit surface orthogonal to the entry surface and a reflecting surface,
wherein the reflecting surface has a deflection pattern that receives a ray of light incoming from the entry surface or the exit surface and outputs the ray of light such that the ray of light is output substantially perpendicular to the exit surface and the deflection pattern has a plurality of arcuate deflection pattern elements formed on a plurality of concentric circles,
the exit surface has an anisotropic diffusion pattern that transmits so as to spread, a ray of light incoming from the deflection pattern at an angle up to a specified angle with respect to the normal to the exit surface and
the anisotropic diffusion pattern spreads the ray of light incoming from the deflection pattern so that the width of diffusion in a direction orthogonal to the radial direction of arcs of the concentric circles is larger than that in the radial direction.

41. The light guide plate according to claim 40 wherein the center of the concentric circles is positioned on either of the side surfaces of the light guide plate or the vicinity thereof.

42. The light guide plate according to claim 40 wherein the deflection pattern elements emit the light ray such that the angle of the normal to the exit face and the ray of light is smaller than a value within the range of 0.5 degrees to 5 degrees.

43. The light guide plate according to claim 40 wherein the deflection pattern elements compise an arcuate groove or an arcuate protruding part.

44. The light guide plate according to claim 40 wherein the deflection pattern elements comprise an arcuate inclined surface.

45. The light guide plate according to claim 40 wherein the deflection pattern elements comprise a plurality of arcuate inclined surfaces respectively formed in conformance to the plurality of concentric circles.

46. The light guide plate according to claim 44 wherein the arcuate inclined surfaces are disposed on an uninterrupted continuous groove or continuous protruding part and in relation to the exit surface, the arcuate inclined surfaces are inclined in the light source direction.

47. The light guide plate according to claim 46 wherein the angle of inclination α1 in relation to the exit surface of the arcuate inclined surface is between 40 degrees and 50 degrees.

48. The light guide plate according to any of claims 40 to 47 wherein the anisotropic diffusion pattern comprises a surface relief hologram.

49. The light guide plate according to claim 48 wherein the surface relief hologram comprises a plurality of random speckle regions of long linear form extending in the radial direction of the concentric circles.

50. The light guide plate according to claim 40 wherein the reflecting surface comprises a planar part parallel to the exit surface.

51. A backlight device using a light guide plate according to any of claims 31 to 50.

52. A backlight device comprising the light guide plate according to any of claims 31 to 50 and an optical film that deflects light emitted from the light guide plate in the direction of the normal to the planar surface of the light guide plate.

53. The backlight device according to claim 52 wherein the optical film comprises a plurality of refractive surfaces respectively formed in conformance to the plurality of concentric circles.

54. The backlight device according to claim 52 wherein the optical film is formed as a grating or hologram.

55. The backlight device according to any of claims 51 to 54 comprising effectively one or not less than two light emitting points on the entry surface of the light guide plate or the vicinity thereof.

56. The backlight device according to claim 55 wherein the effectively one or not less than two light emitting points each comprise one LED.
